# EUROPÄISCHE PATENTSCHRIFT

(11) **EP 1 485 985 B1**
(45) Veröffentlichungstag und Bekanntmachung des Hinweises auf die Patenterteilung: **02.08.2006**
(21) Anmeldenummer: 03704154.8
(22) Anmeldetag: 12.03.2003
(51) Int. Cl.: H02N 2/00

(54) **PIEZOELEKTRISCHER MOTOR UND VERFAHREN ZUM ANTRIEB DESSELBEN**
PIEZOELECTRIC MOTOR AND METHOD FOR ACTUATING SAME
MOTEUR PIEZO-ELECTRIQUE ET PROCEDE D'ENTRAINEMENT DE CELUI-CI

(30) Priorität: 15.03.2002 CH 452022002
(43) Veröffentlichungstag der Anmeldung: 15.12.2004
(73) Patentinhaber: miniswys SA, 2503 Biel (CH)
(72) Erfinder: WITTEVEEN, Bonny, 5915 HP Venlo (NL)
(74) Vertreter: Frei Patent Attorneys
(86) Internationale Anmeldenummer: PCT/CH2003/000162
(87) Internationale Veröffentlichungsnummer: WO 2003/079462

(56) Entgegenhaltungen:
- EP-A- 0 313 130
- WO-A-01/41228
- WO-A-02/13365
- WO-A-92/10874
- WO-A-98/43306
- WO-A-02/099844
- WO-A-03/036786
- SU-A- 1 820 820

## Beschreibung

Die Erfindung betrifft einen piezoelektrischen Motor gemäss dem Oberbegriff von Anspruch 1. Die Erfindung betrifft weiter ein Verfahren zum Antrieb eines piezoelektrischen Motors gemäss dem Oberbegriff von Anspruch 20.

Aus der Druckschrift EP 1 098 429 A2 ist ein piezoelektrischer Motor bekannt, welcher zumindest zwei um 90 Grad versetzt angeordnete piezoelektrische Längsaktoren umfasst, die über ein ringförmig ausgestaltetes Ankoppelungselement auf eine Welle einwirken und dadurch die Welle in Rotation versetzten. Zur Ansteuerung der einzelnen Längsaktoren sind sinusförmige Spannungssignale erforderlich, welche eine konstante Phasenbeziehung von 90 Grad aufweisen müssen.

Dieser piezoelektrische Motor weist die Nachteile auf, dass mehrere Schwingkörper vorhanden sind, welche aufeinander abzustimmen sind, dass nur geringe Drehmomente erzeugbar sind, dass zwischen dem Ankoppelungselement und der Welle ein grösserer Verschleiss auftritt, und dass der piezoelektrische Motor relativ teuer ist.

WO 2001/41228 offenbart einen piezoelektrischen Motor mit einem Stator und einem Läufer, welche einen Spalt bilden. Ein piezoelektrischer Wandler ist mit einem Teil des Stators verbunden und bildet mit diesem einen Resonator. Der Resonator weist eine Masseverteilung auf, die derart gestaltet ist, dass infolge einer anregenden Schwingung, abhängig von der Frequenz der anregenden Schwingung, der Resonator asymmetrisch in mehrere Richtungen schwingt. Dabei wird der Läufer durch ein Vorschubelement des Resonators angetrieben.

Es ist Aufgabe der vorliegenden Erfindung einen vorteilhafteren piezoelektrischen Motor zu schaffen. Diese Aufgabe wird gelöst mit einem piezoelektrischen Motor aufweisend die Merkmale von Anspruch 1. Die Unteransprüche 2 bis 19 betreffen weitere, vorteilhafte Ausgestaltungen. Die Aufgabe wird weiter gelöst mit einem Verfahren zum Antrieb eines piezoelektrischen Motors aufweisend die Merkmale von Anspruch 20.

Die Aufgabe wird insbesondere gelöst mit einem piezoelektrischen Motor umfassend einen Stator und einen Läufer welche einen Spalt bilden, wobei der Stator oder der Läufer mit einem piezoelektrischen Wandler verbunden ist, welcher zusammen mit dem Stator oder Läufer einen Resonator bildet, wobei der Resonator in einer Hauptschwingungsrichtung anregbar ist, und wobei der Stator eine dem Läufer zugewandte oder der Läufer eine dem Stator zugewandte Angriffsfläche aufweist, und der Stator oder der Läufer ein im Winkel zur Hauptschwingungsrichtung verlaufendes, elastisches (flexibles) Vorschubelement umfasst, welches derart den Spalt zwischen Stator und Läufer überbrückt, dass das Vorschubelement zumindest zeitweise auf der Angriffsfläche aufliegt. Das Vorschubelement weist einen ersten Teilabschnitt sowie einen zweiten Teilabschnitt auf, wobei der erste Teilabschnitt mit dem Stator respektive dem Läufer verbunden ist und wobei die Teilabschnitte eine unterschiedliche Resonanzfrequenz aufweisen.

Der Resonator versetzt das Vorschubelement in eine oszillierende Mikrobewegung, sodass das Vorschubelement periodisch eine Vorschubkraft auf die Angriffsfläche ausübt, und der Läufer bezüglich dem Stator eine Vorschubbewegung erfährt, sodass der Läufer bewegt wird.

In einer besonders vorteilhaften Ausgestaltung ist der piezoelektrische Motor als Rotationsmotor ausgestaltet, mit einem kreisförmigen, als Rotor ausgestalteten Läufer, und einem kreisringförmigen, den Rotor umschliessenden Stator. Der Stator ist mit einem oder zwei piezoelektrischen, ringförmigen Wandlern bestückt, welche zusammen mit dem Stator einen Resonator bilden. Dieser Resonator weist eine radial zum Drehzentrum des Rotors verlaufende Hauptschwingungsrichtung auf, sodass der Resonator eine in radialer Richtung verlaufende Mikrobewegung ausführt. Das Vorschubelement ist mit dem Stator oder dem Rotor verbunden, ist bevorzugt im wesentlichen geradlinig verlaufend ausgestaltet, und verläuft bezüglich der Hauptschwingungsrichtung bevorzugt unter einem Winkel von grösser als 0 Grad, insbesondere unter einem Winkel zwischen 20 und 60 Grad. In einer vorteilhaften Ausgestaltung sind eine Mehr- bis Vielzahl von Vorschubelementen in Umfangsrichtung des Stators oder des Rotors gegenseitig gleichmässig beabstandet angeordnet, wobei alle Vorschubelemente an derselben Angriffsfläche aufliegen. Abhängig von der Ausrichtung des Vorschubelementes ergibt sich ein links drehender oder ein rechts drehender piezoelektrischer Motor.

In einer weiteren, vorteilhaften Ausgestaltung ist das Vorschubelement nicht geradlinig verlaufend ausgestaltet, sondern weist einen ersten Teilabschnitt sowie einen zweiten Teilabschnitt auf, welche sich in einer Knickstelle treffen. Der erste sowie der zweite Teilabschnitt weisen eine unterschiedliche Resonanzfrequenz (Eigenfrequenz) auf, was zur Folge hat, dass der piezoelektrische Rotationsmotor abhängig von der Frequenz des Resonators eine Linksdrehung oder eine Rechtsdrehung ausführt. Die beiden Teilabschnitte können im Betrieb des Motors frei schwingen. Der erste Teilabschnitt schwingt dabei gegenüber dem mit ihm verbundenen Stator respektive Rotor, der zweite Teilabschnitt schwingt gegenüber dem ersten Teilabschnitt und wirkt auf die Angriffsfläche.

In einer weiteren, vorteilhaften Ausgestaltung ist der erfindungsgemässe piezoelektrische Motor als Linearmotor ausgestaltet, wobei sich der Stator in linearer Richtung erstreckt, und der Läufer in dieser Richtung beweglich gelagert ist.

Der erfindungsgemässe piezoelektrische Motor weist die Vorteile auf:
dass dieser links drehend, rechts drehend oder in beiden Richtungen drehend ausgestaltbar ist,
dass das maximale Drehmoment und die Geschwindigkeit über den Angriffswinkel des Vorschubelementes bezüglich der Angriffsfläche einstellbar ist,
dass die Angriffsfläche relativ gross ist, sodass das auf die Angriffsfläche wirkende Vorschubelement nur einen geringen Verschleiss zur Folge hat,
dass das Vorschubelement ohne eine hämmernde Bewegung auf die Angriffsfläche einwirkt, was einen geringen Verschleiss zur Folge hat,
dass zum Betrieb nur ein einziger Resonator erforderlich ist, was im Gegensatz zu der bekannten Verwendung mehrerer Resonatoren das Abstimmen des mechanischen Resonanzkreises wesentlich vereinfacht,
dass der Aufbau sehr einfach,
dass die Herstellungskosten relativ gering sind,
dass dieser sehr klein und leise ist, zudem weitgehend schlupffrei betreibbbar ist und bezüglich Drehwinkel eine feine Auflösung aufweist,
dass die Welle biegemomentfrei angetrieben werden kann,
dass dieser mit geringer Drehzahl betreibbar ist, ein hohes Drehmoment aufweist, und somit ohne Übersetzungsgetriebe betreibbar ist,
dass dieser eine kurze Hochlauf- und Stopzeit im Bereich von Millisekunden aufweist,
dass dieser ein geringes Bauvolumen aufweist,
dass dieser nahezu kein elektromagnetisches Streufeld emittiert;
und dass dieser einen hohen Wirkungsgrad aufweist.

Mehrere Ausführungsbeispiele der erfindungsgemässen Vorrichtung werden nachfolgend anhand der folgenden Figuren im Detail beschrieben.

### Es zeigen:

- **Figur 1a**: eine Seitenansicht eines radial schwingenden Resonators sowie dessen kontrahierter Zustand;
- **Figur 1b**: eine Seitenansicht eines radial schwingenden Resonators sowie dessen expandierter Zustand;
- **Figur 1c**: einen Schnitt durch den Resonator entlang der Schnittlinie A-A;
- **Figur 2a**: eine Seitenansicht eines weiteren radial schwingenden Resonators sowie dessen expandierter Zustand;
- **Figur 2b**: ein Seitenansicht eines weiteren radial schwingenden Resonators sowie dessen kontrahierter Zustand;
- **Figur 2c**: einen Schnitt durch den Resonator entlang der Schnittlinie B-B;
- **Figur 3a**: eine Seitenansicht eines links laufenden Rotors;
- **Figur 3b**: eine schematische Seitenansicht eines links laufenden Rotors;
- **Figur 4**: eine Seitenansicht eines rechts laufenden Rotors;
- **Figur 5a**: eine Seitenansicht eines nach links drehenden Rotors, welcher in beiden Drehrichtungen lauffähig ist;
- **Figur 5b**: eine Seitenansicht eines nach rechts drehenden Rotors, welcher in beiden Drehrichtungen lauffähig ist;
- **Figur 5c**: eine schematische Ansicht des Rotors mit Vorschubelement;
- **Figur 5d**: eine Detailansicht eines weiteren Vorschubelementes;
- **Figur 6**: eine Seitenansicht eines Rotors, welcher in beide Drehrichtungen lauffähig ist;
- **Figur 7**: das Frequenzverhalten des Stators bzw. dessen Resonanzkurve;
- **Figur 8**: die erste und zweite Resonanzkurve des Stators;
- **Figur 9a**: eine Seitenansicht eines als Innenläufer ausgestalteten piezoelektrischen Motors ohne Lagerung;
- **Figur 9b**: einen Schnitt durch den in Figur 9a dargestellten Motor entlang der Schnittlinie C-C;
- **Figur 10a**: eine Seitenansicht eines weiteren als Innenläufer ausgestalteten piezoelektrischen Motors mit Lagerung;
- **Figur 10b**: einen Schnitt durch den in Figur 10a dargestellten Motor entlang der Schnittlinie D-D;
- **Figur 11a**: eine Seitenansicht eines weitern als Innenläufer ausgestalteten piezoelektrischen Motors ohne Lagerung;
- **Figur 11b**: einen Schnitt durch den in Figur 11a dargestellten Motor entlang der Schnittlinie E-E;
- **Figur 12a**: eine Seitenansicht eines als Aussenläufer ausgestalteten piezoelektrischen Motors ohne Lagerung;
- **Figur 12b**: einen Schnitt durch den in Figur 12a dargestellten Motor entlang der Schnittlinie F-F;
- **Figur 13a**: eine Seitenansicht eines als Aussenläufer ausgestalteten piezoelektrischen Motors mit Lagerung;
- **Figur 13b**: einen Schnitt durch den in Figur 13a dargestellten Motor entlang der Schnittlinie G-G;
- **Figur 14a**: eine Seitenansicht eines als Innenläufer ausgestalteten piezoelektrischen Motors mit einem Hohlläufer;
- **Figur 14b**: einen Schnitt durch den in Figur 14a dargestellten Motor entlang der Schnittlinie H-H;
- **Figur 15a**: eine Seitenansicht eines Linearmotors für Links- und Rechtslauf;
- **Figur 15b**: einen Schnitt durch den in Figur 15a dargestellten Linearmotor entlang der Schnittlinie I-I;
- **Figuren 16a, 16b, 16c**: eine etwas abgewandelte Ausführungsform des Motors;
- **Figur 17a**: eine Seitenansicht eines weiteren Linearmotors für Links- und Rechtslauf; und
- **Figuren 17b, 17c, 17d**: jeweils verschiedene Varianten eines Linearmotors mit einer Seitenansicht gemäss Figur 17a, als Schnitt entlang der Schnittlinie J-J.

Wenn nachfolgend von Stator und Läufer bzw. Rotor gesprochen wird, so sind diese Begriffe gegeneinander austauschbar, denn der als Stator bezeichnete, feststehende Teil des Motors kann auch der Läufer beziehungsweise der rotierende Teil des Motors sein, wenn der als Läufer bzw. Rotor bezeichnete Teil feststehend angeordnet ist.

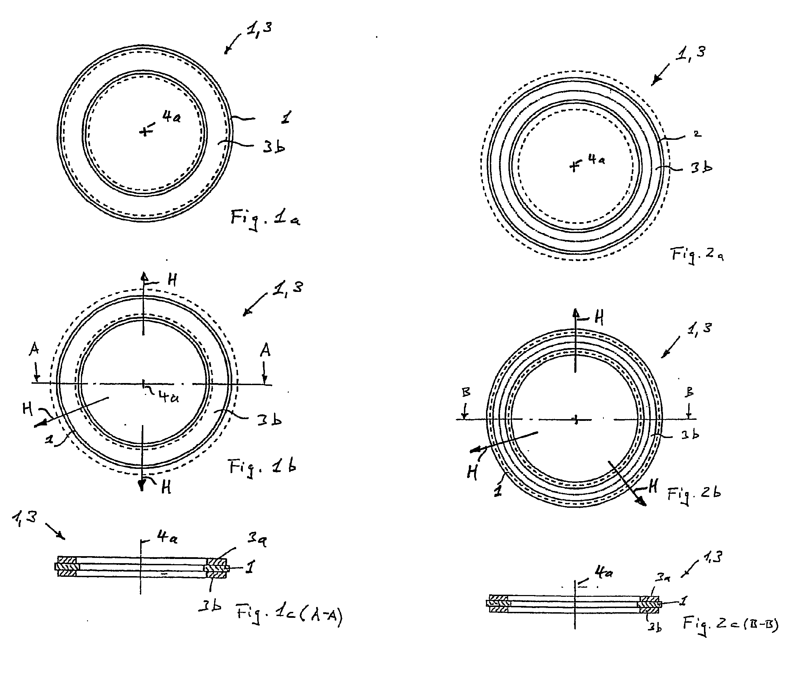

Figur 1a und Figur 1b zeigen einen Resonator 1,3 bestehend aus einem kreisringförmigen Stator 1 aus Metall oder Keramik sowie aus zwei ringförmigen piezoelektrischen Wandlern 3a,3b, welche beidseitig am Stator 1 angeordnet und mit diesem fest verbunden sind. Der Resonator 1,3 ist bezüglich dem Zentrum 4a axialsymmetrisch ausgestaltet, und weist im erregten Zustand eine bezüglich dem Zentrum 4a in radialer Richtung verlaufende Hauptschwingungsrichtung H bzw. Mikrobewegung auf. Dabei ist der Resonator 1,3 derart ausgestaltet, dass dieser sich gesamthaft kontrahiert, wie dies in Figur 1a durch die strichliert dargestellte Umrisslinie angedeutet ist, oder dass dieser gesamthaft expandiert, wie dies in Figur 1b durch die strichliert dargestellte Umrisslinie angedeutet ist.

Figur 1c zeigt einen Schnitt durch den Resonator 1,3 entlang der Schnittlinie A-A.

Figur 2a und Figur 2b zeigen einen weiteren Resonator 1,3, welcher im Unterschied zu der in den Figuren 1a,1b dargestellten Ausführungsform derart zu einer bezüglich dem Zentrum 4a radial verlaufenden Hauptschwingungsrichtung H anregbar ist, dass sich die Ringbreite des Resonators 1,3 vergrössert, wie dies in Figur 2a durch die strichliert dargestellte Umrisslinie angedeutet ist, oder dass sich die Ringbreite des Resonators 1,3 verkleinert, wie dies in Figur 2b durch die strichliert dargestellte Umrisslinie angedeutet ist.

Figur 2c zeigt einen Schnitt durch den Resonator 1,3 entlang der Schnittlinie B-B.

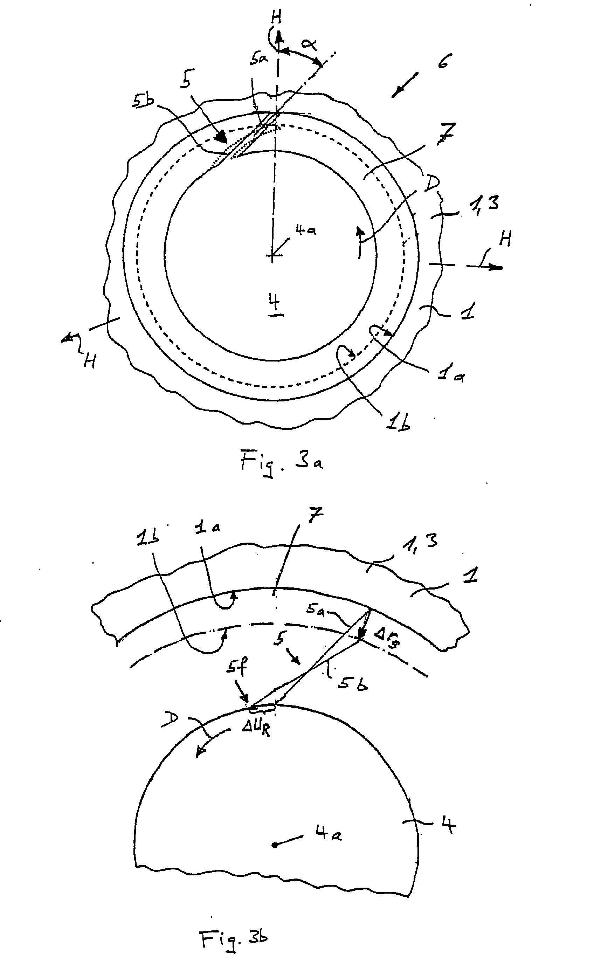

Figur 3a zeigt ein Detail eines piezoelektrischen Motors 6, welcher einen Resonator 1,3 aufweist, wie dieser in den Figuren 1a,1b,2a,2b offenbart ist. Der Resonator 1,3 weist eine nach Innen ausgerichtete Angriffsfläche 1a auf. Der Resonator 1,3 ist in Hauptschwingungsrichtung H anregbar, sodass die Angriffsfläche 1a in dieser Richtung oszilliert. Die strichliert dargestellte Angriffsfläche 1b zeigt die Lage der Angriffsfläche 1a zum Zeitpunkt der maximalen Kontraktion des Resonators 1,3. Innerhalb des Stators 1 ist unter Ausbildung eines Spaltes 7 ein kreisförmiger Rotor 4 mit Drehzentrum 4a angeordnet. An der Oberfläche des Rotors 4 ist ein im Winkel α zur Hauptschwingungsrichtung H verlaufendes, elastisches Vorschubelement 5 angeordnet. In einer Grundstellung weist die Angriffsfläche die mit 1a bezeichnete Lage auf, und das Vorschubelement 5 die mit 5a bezeichnete Lage. Während der Bewegung der Angriffsfläche 1a zu der mit 1b bezeichneten Lage verbiegt sich das Vorschubelement 5 und geht dabei in die mit 5b bezeichnete Schubstellung über. Da die Reibungskraft zwischen der Angriffsfläche 1a und dem Vorschubelement 5 genügend hoch ist, bleibt das Vorschubelement 5 während der Kontraktion der Angriffsfläche von der Lage 1a zur Lage 1b auf derselben Position der Angriffsfläche 1a,1b abgestützt, weshalb das Vorschubelement 5 auf den Rotor 4 eine nach links ausgerichtete Kraft bewirkt, sodass der Rotor 4 eine Linksdrehung in Richtung D erfährt. Bei der rückschwingenden Bewegung der Angriffsfläche von der Lage 1b zur Lage 1a erfährt der Resonator 1,3 eine hohe Beschleunigung. Die Reibungskraft des Vorschubelementes 5 an der Angriffsfläche 1a,1b ist dadurch sehr klein, sodass während der rückschwingenden Bewegung keine oder eine nur sehr geringe, in Drehrichtung D wirkende Kraft auf de Rotor 4 ausgeübt wird, sodass dieser im wesentlichen keine Bewegung erfährt. Durch die nachfolgende Kontraktion des Resonators 1,3 wird der Rotor 4 über das Vorschubelement 5 jedoch wieder in Richtung D gedreht. Solange der Resonator 1,3 in Hauptschwingungsrichtung H oszilliert führt der Rotor 4 somit eine Linksdrehung in Richtung D aus. Sobald der Resonator 1,3 in Ruhe verharrt führt der Rotor 4 keine Drehbewegung mehr aus. Somit kann der piezoelektrische Motor 6 beliebig gestartet und wieder gestoppt werden.

Figur 3b zeigt die Funktionsweise des in Figur 3a dargestellten piezoelektrischen Motors 6 nochmals im Detail. Der Resonator 1,3 mit Angriffsfläche 1a wird in radialer Richtung um die Distanz Δrs kontrahiert, sodass die Angriffsfläche die mit 1b dargestellte Lage einnimmt. Dabei wird das Vorschubelement 5 von der Grundstellung 5a in die Schubstellung 5b überführt, und die Spitze 5f des Vorschubelementes 5 um den Betrag ΔUR in Drehrichtung D verschoben, sodass die auf dem Rotor 4 aufliegende Spitze 5f den Rotor 4 um diesen Betrag dreht.

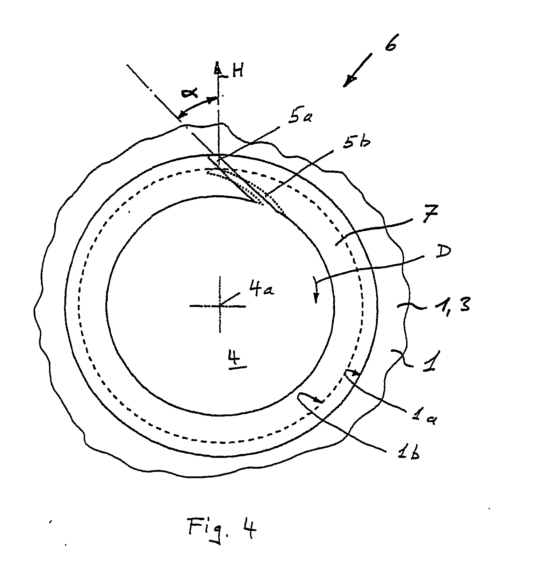

Figur 4 zeigt eine abgewandelte Ausführungsform des in Figur 3a dargestellten piezoelektrischen Motor 6, indem das Vorschubelement 5, im Vergeich zur Ausführungsform gemäss Figur 3a, bezüglich der Hauptschwingungsrichtung H in entgegen gesetzter Richtung verlaufend angeordnet ist. Dies hat zur Folge, dass der Rotor 4 während dem Oszillieren des Resonators 1,3 eine Drehung in Richtung D erfährt, und somit eine Rechtsdrehung ausführt. Mit Ausnahme der Anordnung des Vorschubelements 5 sind die in Figur 3a und Figur 4 dargestellten piezoelektrischen Motoren 6 identisch ausgestaltet.

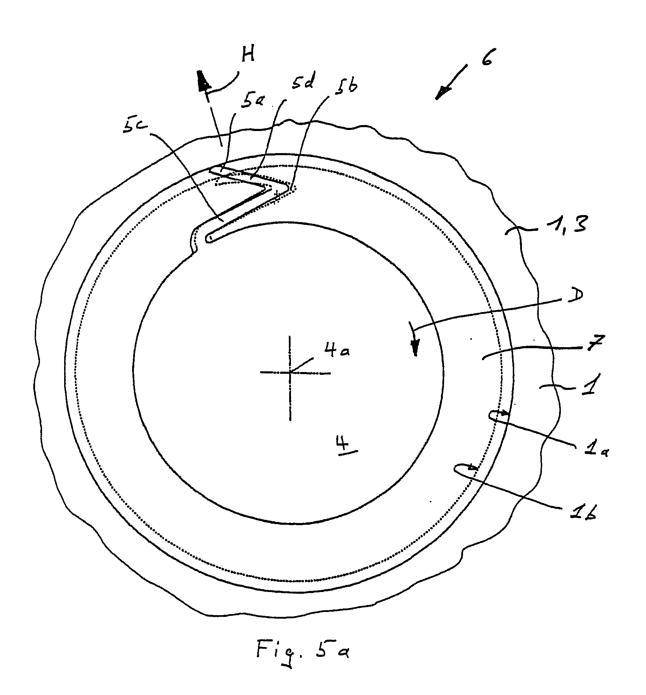

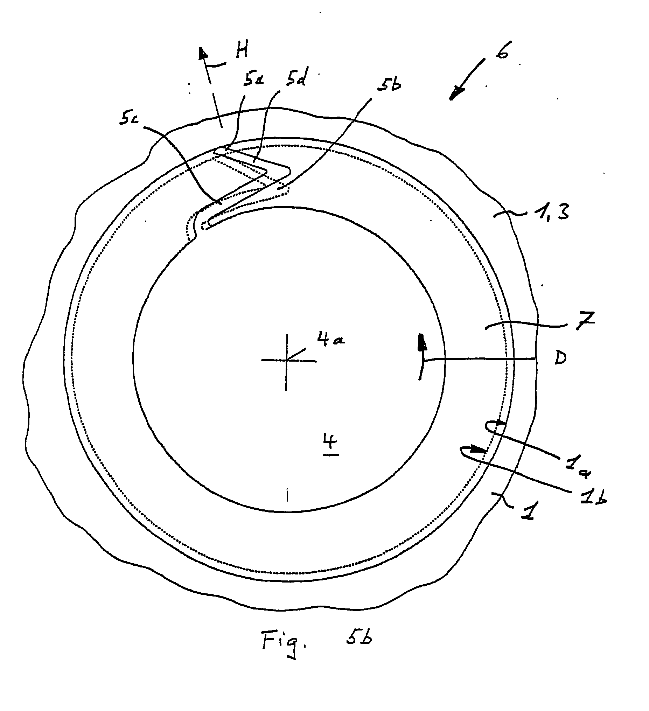

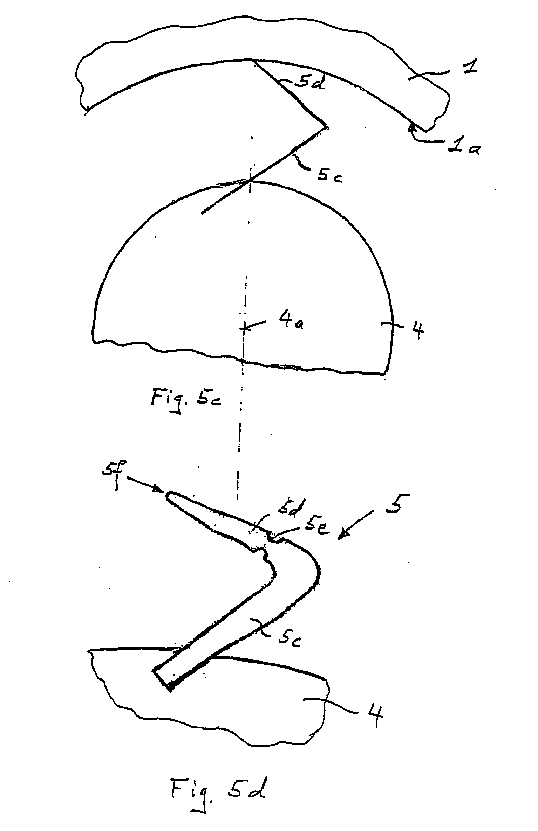

Die Figuren 5a und 5b zeigen einen piezoelektrischen Motor 6, welcher im Unterschied zu der in Figur 4 dargestellten Ausführungsform ein geknickt verlaufendes Vorschubelement 5 aufweist. Das Vorschubelement 5 umfasst einen ersten, mit dem Rotor 4 verbundenen Teilabschnitt 5c, sowie einen daran anschliessenden, bezüglich der Hauptschwingungsrichtung H in entgegengesetzter Richtung verlaufenden Teilabschnitt 5d.

Figur 5c zeigt das in den Figuren 5a und 5b dargestellte Vorschubelement 5 schematisch im Detail.

Figur 5d zeigt ein Ausführungsbeispiel eines geknickt verlaufenden Vorschubelementes 5 mit erstem Teilabschnitt 5c, einer Verengungsstelle 5e, welche zum zweiten Teilabschnitt 5d mündet, und einer Spitze 5f, in welcher der zweite Teilabschnitt 5d endet. Das Vorschubelement 5 ist fest mit dem Läufer bzw. Rotor 4 verbunden. Die Verengungsstelle 5e ist nicht zwingend, sie kann arbitrarisch angeordnet werden, um die Eigenschwingungen der Teilabschnitte zu beeinflussen.

Das geknickt verlaufende Vorschubelement 5 weist eine technische Eigenschaft auf, welche nachfolgend im Detail erläutert wird. Der erste Teilabschnitt 5c weist eine erste Eigenresonanzfrequenz f1 auf. Der zweite Teilabschnitt 5d weist eine zweite Eigenresonanzfrequenz f2 auf. Die beiden Teilabschnitte 5c,5d sind derart ausgestaltet, und derart gegenseitig mechanisch gekoppelt, dass die beiden Eigenresonanzfrequenzen f1, f2 unterschiedliche Werte aufweisen. Das gesamte Vorschubelement 5 wird über den Resonator 1,3 zur Schwingung angeregt, und schwingt dabei mit einer Frequenz f.

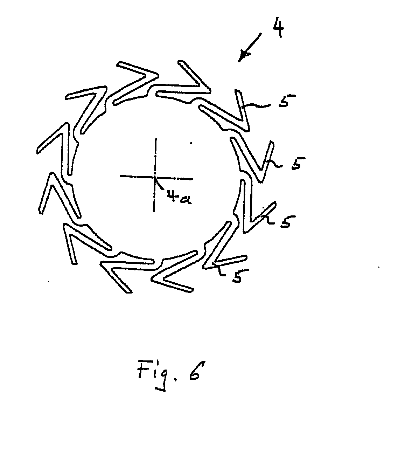

Figur 6 zeigt ein Ausführungsbeispiel eines Rotor 4, an dessen Oberfläche eine Mehrzahl von geknickten Vorschubelementen 5 beabstandet angeordnet sind. In einer bevorzugten Ausgestaltung weist der in den Figuren 5a, 5b dargestellte piezoelektrische Motor 6 den in Figur 6 dargestellten Rotor 4 auf.

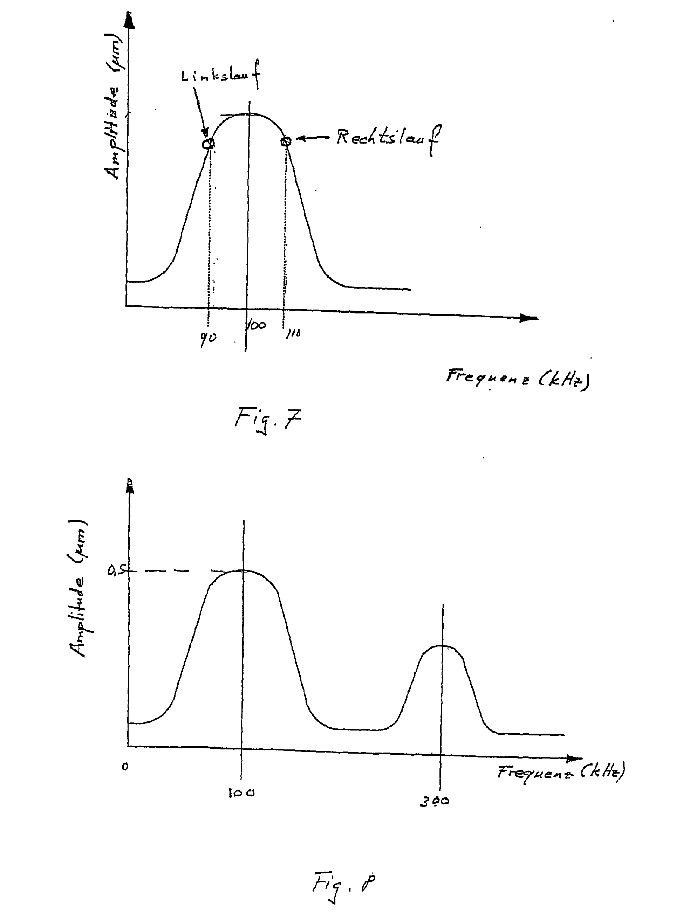

Figur 7 zeigt die Schwingungsamplitude des Vorschubelemente 5 in Funktion der anregenden Frequenz f. Das Vorschubelement 5 weist hier eine beispielsweise Resonanzfrequenz im Bereich von 100 kHz auf.

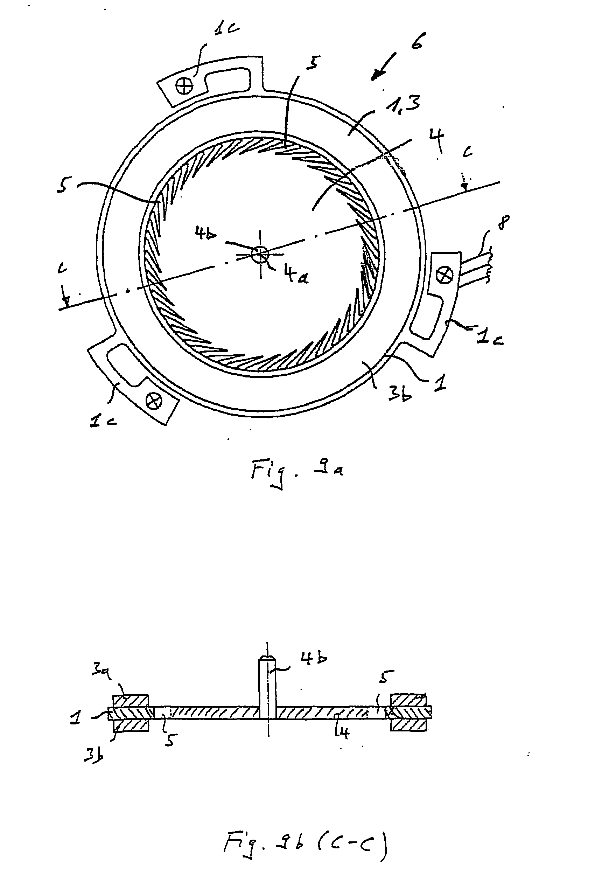

Figur 8 zeigt die Schwingungsamplitude des Resonators 1,3 in Funktion der anregenden Frequenz f, wie dieser für den in den Figuren 5a und 5b dargestellten piezoelektrischen Motor 6 verwendet wird. Der Resonator 1,3 weist hier bei den beispielsweisen Frequenzen 100 kHz und 300 kHz eine Eigenresonanz auf.

Ein Vergleich der Figuren 7 und 8 zeigt, dass der in den Figuren 5a und 5b dargestellte piezoelektrische Motor 6 derart ausgestaltet ist, dass sowohl der Resonator 1,3 als auch das Vorschubelement 5 im Bereich von 100 kHz eine Resonanz aufweisen. Von besonderem Interesse ist der nachfolgend beschriebene technische Effekt. Das Vorschubelement 5 ist derart ausgestaltet, dass unterhalb der Resonanzfrequenz von 100 kHz, wie dargestellt beispielsweise bei 90 kHz, im wesentlichen der erste Teilabschnitt 5c ein Resonanzverhalten mit einer entsprechend hohen Amplitude aufweist. Dieses Resonanzverhalten ist in Figur 5b dargestellt, indem der erste Teilabschnitt 5c relativ stark ausgelenkt wird, wogegen der zweite Teilabschnitt 5d, welcher ausserhalb dessen Resonanzfrequenz angeregt ist, eine nur geringe Auslenkung bzw. Formveränderung erfährt. Dies hat zur Folge, dass der Rotor 4 im Gegenuhrzeigersinn in Drehrichtung D gedreht wird.

Das Vorschubelement 5 ist zudem derart ausgestaltet, dass oberhalb der Resonanzfrequenz von 100 kHz, wie dargestellt beispielsweise bei 110 kHz, im wesentlichen der zweite Teilabschnitt 5c ein Resonanzverhalten mit einer entsprechend hohen Amplitude aufweist. Dieses Resonanzverhalten ist in Figur 5a dargestellt, indem der zweite Teilabschnitt 5d relativ stark ausgelenkt wird, wogegen der erste Teilabschnitt 5c, welcher ausserhalb dessen Resonanzfrequenz angeregt ist, eine nur geringe Auslenkung bzw. Formveränderung erfährt. Dies hat zur Folge, dass der Rotor 4 im Uhrzeigersinn in Drehrichtung D gedreht wird. Somit dreht der in den Figuren 5a und 5b dargestellte piezoelektrische Motor 6, wie in Figur 7 dargestellt, in Abhängigkeit von der Anregungsfrequenz nach links oder rechts. Diese Ausgestaltung des erfindungsgemässen piezoelektrischen Motors weist somit den Vorteil auf, dass er in beiden Drehrichtungen antreibbar ist, dass die Drehrichtung wählbar ist, und dass die Drehrichtung während dem Betrieb beispielsweise auch ständig veränderbar ist.

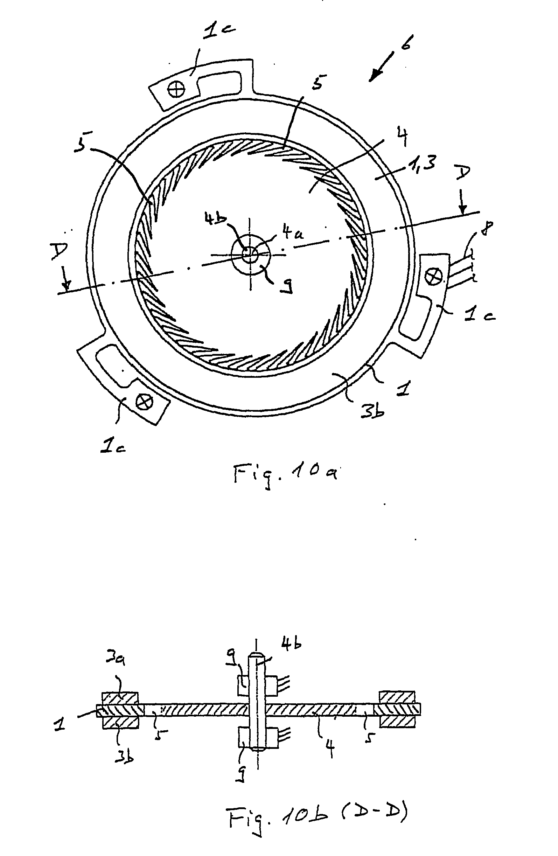

Figur 9a zeigt eine Seitenansicht eines als Innenläufer ausgestalteten piezoelektrischen Motors 6 mit einem Resonator 1,3, einem Stator 1 mit Befestigungselementen 1c, einem ringförmigen piezoelektrischen Wandler 3a,3b mit elektrischen Zuleitungen 8, sowie einem um das Drehzentrum 4a drehbaren Rotor 4 mit einer Vielzahl im Umfangsrichtung beabstandet angeordneter Vorschubelemente 5.

Figur 9b zeigt einen Schnitt durch die Figur 9a entlang der Schnittlinie C-C, aus welchem der Resonator 1,3 mit Stator 1 und piezoelektrischem Wandler 3a,3b sowie der Rotor 4 mit Vorschubelement 5 und einer im Zentrum angeordneten Welle 4b ersichtlich ist.

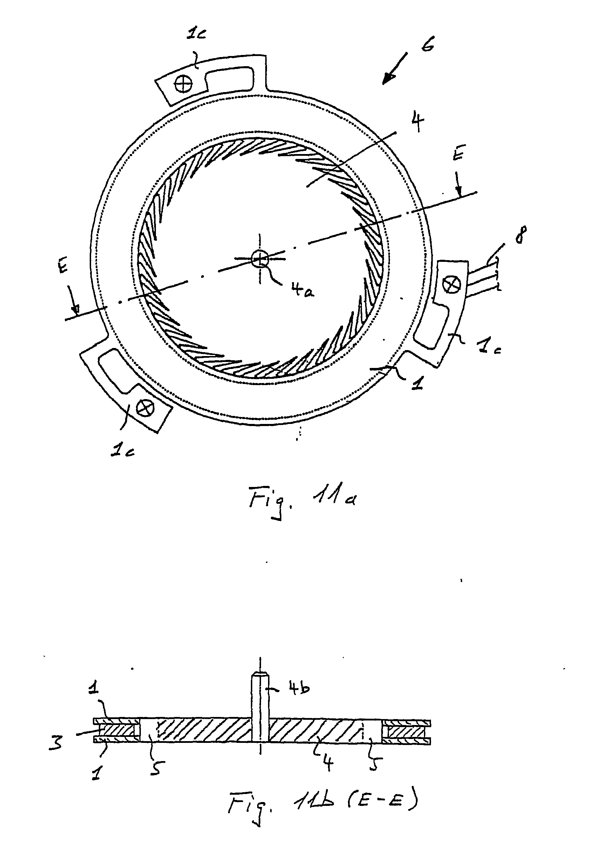

Figur 10a zeigt eine Seitenansicht eines weiteren piezoelektrischen Motors 6, dessen Welle 4b, im Unterschied zu der in Figur 9a dargestellten Ausführungsform, in einem Lager 9 gelagert ist.

Figur 10b zeigt einen Schnitt durch die Figur 10a entlang der Schnittlinie D-D, aus welchem der Resonator 1,3 mit Stator 1 und piezoelektrischem Wandler 3a,3b sowie der Rotor 4 mit Vorschubelement 5 und einer im Zentrum angeordneten Welle 4b ersichtlich ist, welche im Lager 9 gelagert ist.

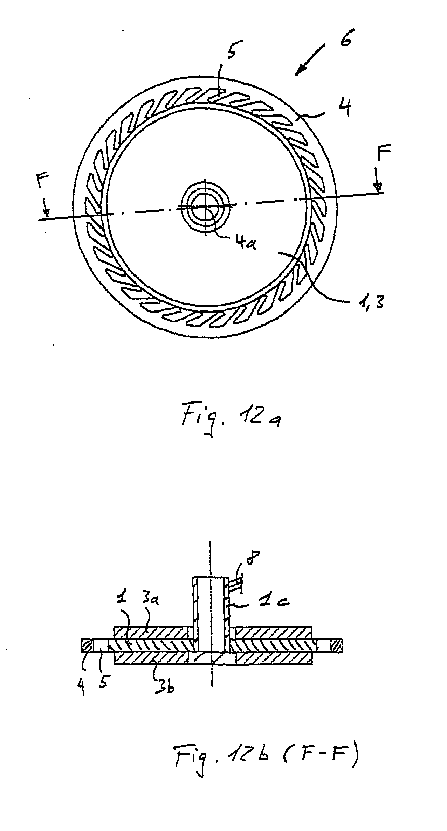

Figur 11a zeigt eine Seitenansicht eines weiteren piezoelektrischen Motors 6, dessen Resonator 1,3 im Unterschied zu der in Figur 9a dargestellten Ausführungsform, zwei Statoren 1 und einen dazwischen angeordneten piezoelektrischen Wandler 3 aufweist.

Figur 11 b zeigt einen Schnitt durch die Figur 11 a entlang der Schnittlinie E-E, aus welchem der Resonator 1,3 mit den beiden Statoren 1 und dem dazwischen angeordneten piezoelektrischen Wandler 3 sowie der Rotor 4 mit Vorschubelement 5 und einer im Zentrum angeordneten Welle 4b ersichtlich ist.

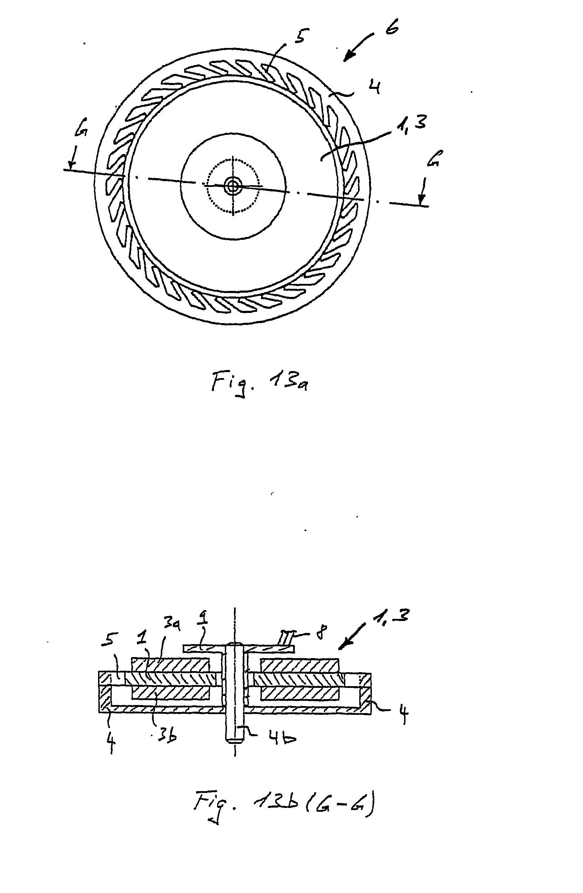

Figur 12a zeigt eine Seitenansicht eines als Aussenläufer ausgestalteten piezoelektrischen Motors 6 mit einem Resonator 1,3, einem Stator 1, welcher über das Befestigungselementen 1c fest verankert ist, zwei scheibenförmigen piezoelektrischen Wandlern 3a,3b mit elektrischen Zuleitungen 8, sowie einem um das Drehzentrum 4a drehbaren, als Hohlläufer ausgestalteten Rotor 4 mit einer Vielzahl im Umfangsrichtung beabstandet angeordneten Vorschubelementen 5. Die Vorschubelemente 5 sind nach innen vorstehend angeordnet und liegen auf der kreisförmigen Aussenfläche des Resonators 1,3 auf.

Figur 12b zeigt einen Schnitt durch die Figur 12a entlang der Schnittlinie F-F, aus welchem der Resonator 1,3 mit Stator 1, piezoelektrischen Wandlern 3a,3b und dem Befestigungselement 1c mit elektrischen Leitungen 8 ersichtlich ist. Der Rotor 4 mit Vorschubelementen 5 ist als Aussenläufer ausgestaltet, und liegt an der Aussenfläche des Resonators 1,3 auf.

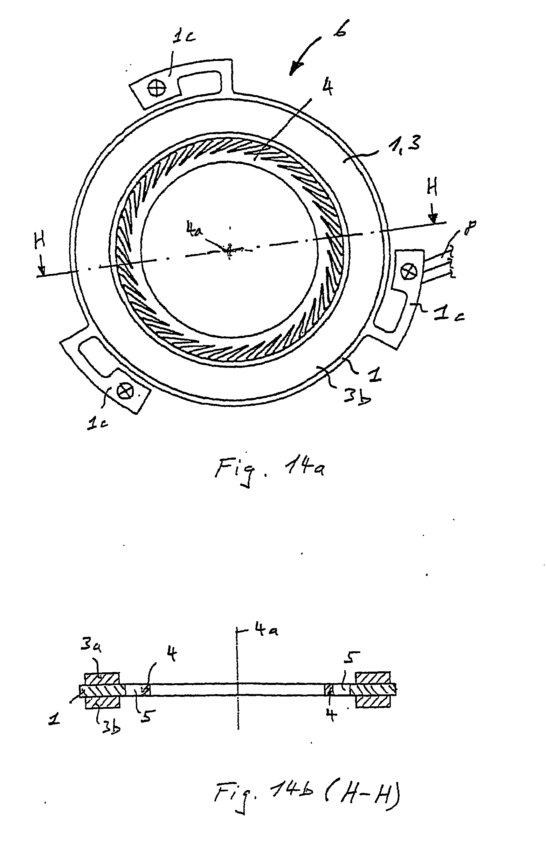

Figur 13a zeigt eine Seitenansicht eines weiteren, als Aussenläufer ausgestalteten piezoelektrischen Motors 6. Im Unterschied zu der in den Figuren 12a und 12b dargestellten Ausführungsform ist sowohl der Stator 1 mit piezoelektrischen Wandlern 3a,3b als auch der Rotor 4 auf einem gemeinsamen Lager 9 mit Welle 4b gelagert.

Figur 13b zeigt einen Schnitt durch die Figur 13a entlang der Schnittlinie G-G, aus welchem der am Lager 9 befestigte Resonator 1,3 mit Stator 1 und piezoelektrischen Wandlern 3a,3b sowie der am der Welle 4b gelagerte Rotor 4 mit Vorschubelementen 5 ersichtlich ist. Die Welle 4b ist fest mit dem Lager 9 verbunden.

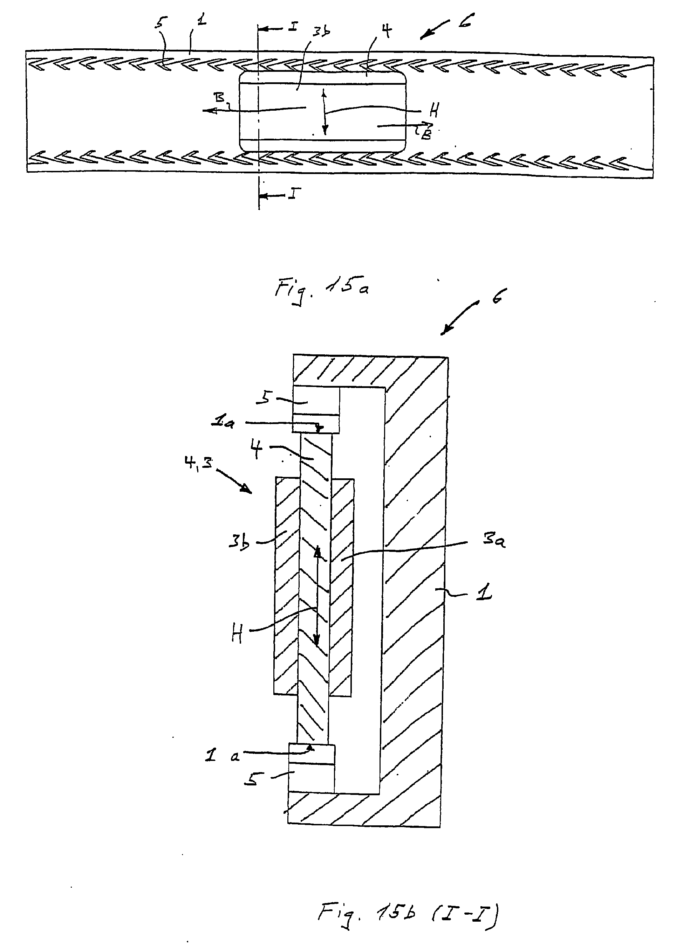

Figur 14a zeigt eine Seitenansicht eines weiteren piezoelektrischen Motors 6, dessen Rotor 4, im Unterschied zu der in Figur 9a dargestellten Ausführungsform, als Hohlläufer 4 ausgestaltet ist.

Figur 14b zeigt einen Schnitt durch die Figur 14a entlang der Schnittlinie H-H, aus welchem der Resonator 1,3 sowie der als Hohlläufer ausgestaltete Rotor 4 ersichtlich ist.

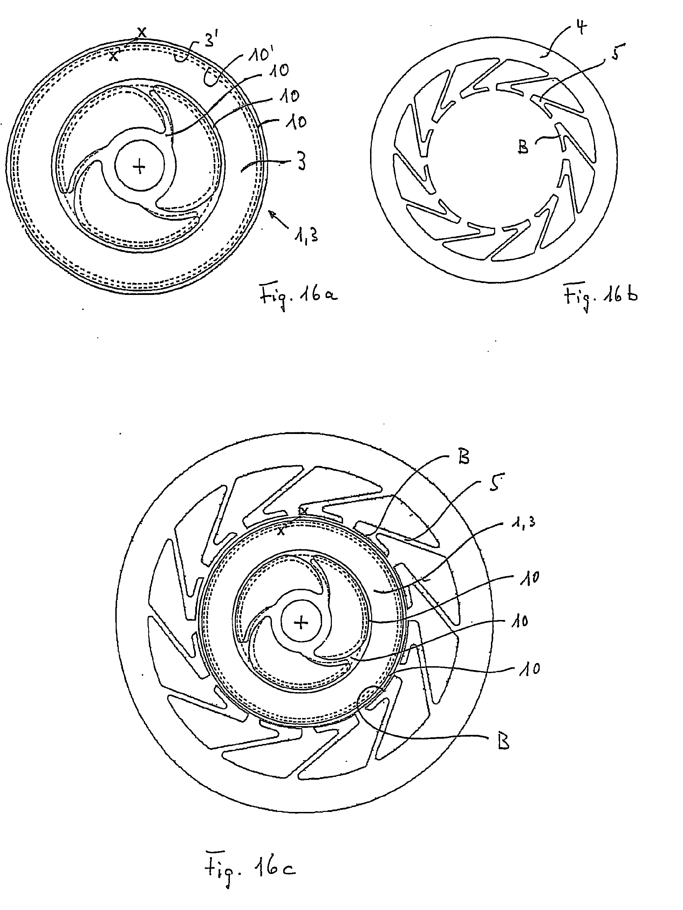

Figur 15a zeigt schematisch dargestellt das Prinzip, wie man den erfindungsgemässen piezoelektrischen Motor 6 als Linearmotor ausgestalten kann. Die elektrischen Anschlüsse zur Anregung des Piezoelements oder bei Sandwichkonstruktion der Piezoelemente sind nicht dargestellt..

Figur 15b zeigt in der schematischen Darstellung einen Schnitt durch den Linearmotor gemäss Figur 15a entlang der Schnittlinie I-I. Der Läufer 4 ist rechteckig und plattenförmig ausgestaltet. Am Läufer 4 ist beidseitig je ein piezoelektrischer Wandler 3a,3b angeordnet, wobei der Läufer 4 und die Wandler 3a,3b einen Resonator 4,3 ausbilden, welcher eine Hauptschwingungsrichtung H aufweist. Der Läufer 4 ist in einer senkrecht zur Hauptschwingungsrichtung H verlaufenden Bewegungsrichtung B im Stator 1 verschiebbar gelagert, und weist oben und unten je eine Angriffsfläche 1a auf. Der Stator 1 weist eine Vielzahl von Vorschubelementen 5 auf, welche zum Läufer 4 hin vorstehend, und in Bewegungsrichtung B beabstandet angeordnet sind. Die Vorschubelemente 5 sind, wie in den Figuren 5a bis 5d im Detail beschrieben, in geknickter Form ausgestaltet und weisen das in Figur 7 dargestellte Resonanzverhalten auf. Dies hat zur Folge, dass der Läufer 4 je nach Anregungsfrequenz des Resonators 4,3 in dem in Figur 15a dargestellten Linearmotor 6 nach links oder rechts bewegt wird.

Analog zu dem in den Figuren 15a und 15b dargestellten Ausführungsbeispielen, könnte auch in den vorhergehend dargestellten Ausführungsbeispielen der piezoelektrische Wandler 3 am Läufer 4 angeordnet sein.

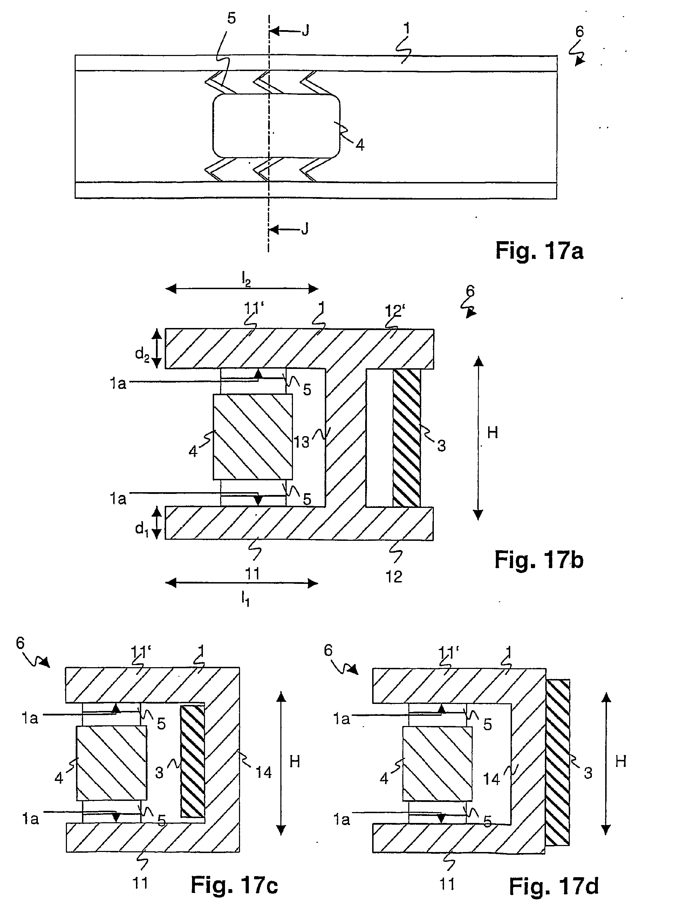

Figur 17a zeigt schematisch eine weitere bevorzugte Ausführungsform der Erfindung als Linearmotor 6. Der Läufer 4 weist also die Vorschubelemente 5 auf, und der Stator 1 weist mindestens einen piezoelektrischen Wandler 3 auf. Die übrigen Merkmale sind, falls nicht anders beschrieben, analog zu jenen der Ausführungsform gemäss Figur 15 ausgestaltet.

Figur 17b zeigt schematisch einen Schnitt durch den Linearmotor 6 gemäss Figur 17a entlang der Schnittlinie J-J. Der Stator 1 weist vorzugsweise einen H-förmigen Querschnitt auf, mit einem ersten Armpaar 11,11' und einem zweiten Armpaar 12,12'. Das erste Armpaar 11,11' bildet einen Kanal, in welchem der Läufer 4 bewegbar ist. Die Angriffsflächen 1a befinden sich an einer Innenseite des ersten Armpaars 11,11' und sind von einem Verbindungsteil 13 des H-Profils beabstandet. Das zweite Armpaar 12,12' bildet einen weiteren Kanal, in welchem der mindestens eine piezoelektrische Wandler 3 angeordnet sind. Ihre Hauptschwingungsrichtung H verläuft senkrecht zur Bewegungsrichtung des Läufers 4, respektive einer Hauptausdehnung des Stators. Falls mehrere piezoelektrische Wandler 3 vorliegen, sind sie in dieser Hauptausdehnungsrichtung voneinander beabstandet angeordnet. Beim Betrieb des Linearmotors 6 werden die Oszillationen des mindestens einen Wandlers 3 auf das zweite Armpaar 12,12' und von diesem durch Hebelwirkung auf das erste Armpaar 11,11' übertragen. Der Stator weist dazu eine gewisse Flexibilität auf, die eine Schwingung der Armpaare 11,11',12,12' bezüglich des Verbindungsteils 13 des H-Profils erlaubt.

Figuren 17c und 17d zeigen jeweils schematisch einen Schnitt durch den Linearmotor 6 mit der Ansicht gemäss Figur 17a, jedoch mit einem U-förmigen. Querschnitt. Ein oder mehrere Wandler 3 sind mit einem Bodenteil 14 des U-Profils verbunden respektive an einer Innenseite (Figur 17c) oder Aussenseite (Figur 17d) des Bodenteils an diesem angebracht. Der oder die Wandler 3 erstrecken sich vorzugsweise in der Hauptschwingungsrichtung H teilweise oder zumindest annähernd vollständig über das Bodenteil 14. Der Resonator 3,4 weist zwei stabile Resonanzfrequenzen auf. Bei Anregung des Piezoelements 3 mit einer ersten Resonanzfrequenz, beispielsweise bei 20 kHz, resultiert eine Biegung und Schwingung vor allem des Bodens 14 des U-Profils zusammen mit den Armpaaren 11,11'. Bei einer zweiten Resonanzfrequenz, beispielsweise bei 30 kHz, bleibt der Boden 14 relativ flach und es schwingt vor allem nur das Armpaar 11,11'. Diese beiden Resonanzfrequenzen sind auf die Resonanzfrequenzen der Vorschubelemente 5 des Läufers 4 abgestimmt und bewirken somit einen Linkslauf respektive Rechtslauf des Läufers 4. Vorzugsweise sind in dieser Ausführungsform wie auch in allen anderen die Anregungs- respektive Resonanzfrequenzen ausserhalb des menschlichen Hörbereichs, vorzugsweise höher als 16 kHz oder 20 kHz.

Eine Ausdehnung des Stators in der Zeichnungsebene und senkrecht zur Hauptschwingungsrichtung H liegt vorzugsweise in einem Bereich zwischen 1 mm bis 3 mm oder 30 mm, und eine Breite des Läufers 4, also ein Abstand der Angriffsflächen 1a liegt vorzugsweise in einem Bereich zwischen 1mm bis 3 mm oder 20 mm. Auch Querschnittsflächen unter 1 mm² und Ausdehnungen von mehreren Zentimetern sind realisierbar.

In einer bevorzugten Ausführungsform der Erfindung weist bei einem oder beiden der Armpaare 11,11',12,12' jeweils einer der Arme eine andere Eigenfrequenz auf als der andere. Beispielsweise weist ein erster Arm 11 des ersten Armpaares in Hauptschwingungsrichtung eine Dicke d₁ auf, die sich von einer Dicke d₂ eines zweiten Armes 11' des ersten Armpaares unterscheidet. Alternativ dazu oder zusätzlich weist der erste Arm 11 des ersten Armpaares einen Hebelarm l₁ auf, der sich von einem Hebelarm l₂ des zweiten Armes 11' des ersten Armpaares unterscheidet. Dies hat unter anderem den Vorteil, dass keine hohen Toleranzanforderungen an die Dimensionen der Arme 11,11' erfüllt sein müssen.

Zur Erhöhung des Reibwertes bzw. zur Verbesserung des Kraftschlusses zwischen der Angriffsfläche 1a und dem Vorschubelement 5 können die entsprechenden Oberflächen beispielsweise am Vorschubelement 5 vergrössert werden (Anschleifen, Abbiegen oder durch Anformungen), sie können eine definierte Oberflächenrauhigkeit aufweisen, eine Mikroverzahnung aufweisen, oder aus geeigneten Werkstoffpaarungen bestehen.

Die Figuren 16a, 16b und 16c zeigen eine etwas abgewandelte spezielle Ausbildung des erfindungsgemässen Piezomotor jeweils in Aufsicht. Zur besseren Verständlichmachung sind Rotor, hier als Aussenläufer und Stator, hier als Resonator einzeln und beides im Ensemble dargestellt.

Ein Piezokeramikring 3, kombiniert mit einem nach Figur 16a ausgestalteten Metallblech 10, wird mit einer Wechselspannung zum Schwingen gebracht, so, dass ein radiales Zusammenziehen und wieder Ausdehnen entsteht. Bei geeigneter Geometriewahl beginnen der Piezokeramikring 3 und das Metallblech 10 zum Zentrum +, wo bspw. eine Einspannung angeordnet ist, eine Torsionsschwingung auszuführen. Durch diese zwei Schwingungen, die radiale des Piezorings und die rotative der Torsion, in Überlagerung, beschreibt ein Punkt X auf der Aussenseite des Metallbleches eine Kurvenbahn zum Punkt X' auf der gestrichelten Linie 10` auf der Peripherie des ausgelenkten Metallbleches und wieder zurück. Die zweite gestrichelte Linie 3` zeigt die Auslenkung des Piezoelements. Durch diese überlagerte Auslenkung wird ein beliebiges Teil, welches die Aussenseite des Ringes berührt, bspw. ein Aussenläufer mit Vorschubelementen, in Bewegung versetzt. Der Aufbau kann als Sandwich zwischen zwei Piezokeramikringen oder mit nur einem Piezokeramikring ausgeführt werden, wie das mehrfach in den vorangehenden Figuren schon besprochen wurde.

Ein nach Figur 16b ausgestalteter Aussenläufer mit einer ringförmig angeordneten Anzahl Vorschubelementen 5, siehe auch Figur 12a mit ähnlicher Form, ist so ausgestaltet, dass die Vorschubelemente 5, nicht zwangsläufig, aber hier beispielsweise, eine vergrösserte Berührungsfläche B (nicht zu verwechseln mit dem Vorschubelement mit verschiedenen Teilbereichen mit verschiedenen Eigenfrequenzen, welche den anzutreibenden Teil praktisch nur mit der Spitze berühren) zum torsionsschwingenden Resonator aufweisen. Im Ensemble Stator 1,3 und dem Aussenläufer 4, wie in Figur 16c dargestellt, erkennt man das Prinzip dieses Antriebs mit überlagerten Schwingungen.

Zum Betrieb des Motors: Der erfindungsgemässe piezoelektrische Motor 6 umfassend einen Stator 1 sowie den Läufer 4, wobei der Stator 1 oder der Läufer 4 piezoelektrisch zu einer Schwingung mit Hauptschwingungsrichtung H anregbar ist, wird vorzugsweise derart betrieben, dass der Stator 1 eine dem Läufer 4 zugewandte oder der Läufer 4 eine dem Stator 1 zugewandte Angriffsfläche 1a; 4a aufweist, dass der Stator 1 oder der Läufer 4 eine quer zur Hauptschwingungsrichtung H verlaufendes, zur Angriffsfläche 1a;4a hin ausgerichtetes Vorschubelement 5 umfasst, und dass das Vorschubelement 5 auf Grund der Schwingung derart in Wirkverbindung mit der Angriffsfläche 1a;4a gebracht wird, dass der Läufer 4 bezüglich dem Stator 1 bewegt wird.

In einem weiteren Verfahren zum Betrieb des Motors wird derart vorgegangen, dass das Vorschubelement einen ersten Teilabschnitt 5c sowie einen zweiten Teilabschnitt 5d aufweist, dass der erste Teilabschnitt 5c im Winkel zur Hauptschwingungsrichtung H verläuft, dass der zweite Teilabschnitt 5d im Winkel zur Hauptschwingungsrichtung H und entgegengesetzt zum ersten Teilabschnitt 5c verläuft, dass der erste und zweite Teilabschnitt 5c,5d eine unterschiedliche Resonanzfrequenz aufweisen, und dass in Abhängigkeit der Frequenz der angreifenden Schwingung der Läufer 4 bezüglich dem Stator 1 in die eine Richtung oder in die dazu entgegen gesetzte Richtung bewegt wird.

Die hier vorgestellten Ausführungsformen können grob in zwei Gruppen aufgeteilt werden, je nachdem, welcher Teil als Resonator ausgebildet wird. Bei der einen Gruppe wird der Teil an welchem das/die Vorschubelement/en angeordnet ist/sind als Resonator ausgebildet, sodass der Resonator über die Vorschubelemente gefedert abgestützt ist und die Vorschubelemente auf den andern Teil über die Berührungsstellen antreibend wirken. Bei der anderen Gruppe wird der Teil, welcher den Vorschubelementen gegenübersteht als Resonator ausgebildet, sodass die Bewegung des Resonators über die Berührungsstellen auf die Vorschubelemente antreibend wirkt.

Der erfindungsgemässe piezoelektrische Motor kann durch seine guten Eigenschaften beispielsweise für zeitmesstechnische Vorrichtungen, optische Apparate, Messinstrumente oder Tachometer etc. verwendet werden.

## Patentansprüche

1. Piezoelektrischer Motor (6) umfassend einen Stator (1) und einen Läufer (4) welche einen Spalt (7) bilden, sowie umfassend einen mit dem Stator (1) oder dem Läufer (4) verbundenen piezoelektrischen Wandler (3), welcher mit dem Stator (1) oder Läufer (4) einen Resonator (1,3; 4,3) bildet, wobei der Resonator (1,3; 4,3) in einer Hauptschwingungsrichtung (H) anregbar ist, **dadurch gekennzeichnet, dass** der Stator (1) eine dem Läufer (4) zugewandte oder der Läufer (4) eine dem Stator (1) zugewandte Angriffsfläche (1a; 4a) aufweist, und dass der Stator (1) oder der Läufer (4) ein elastisches Vorschubelement (5) umfasst, welches derart den Spalt (7) zwischen Stator (1) und Läufer (4) überbrückt, dass das Vorschubelement (5) zumindest zeitweise auf der Angriffsfläche (1a;4a) aufliegt und welches Vorschubelement (5) einen ersten Teilabschnitt (5c) sowie einen zweiten Teilabschnitt (5d) aufweist, wobei der erste Teilabschnitt (5c) mit dem Stator (1) respektive dem Läufer (4) verbunden ist und wobei die Teilabschnitte (5c,5d) eine unterschiedliche Resonanzfrequenz aufweisen.

2. Piezoelektrischer Motor nach Anspruch 1, **dadurch gekennzeichnet, dass** dieser als Linearmotor ausgestaltet ist, dass der Resonator (1,3;4,3) eine Bewegungsrichtung (B) aufweist, welche senkrecht zur Hauptschwingungsrichtung (H) verläuft, und dass die Angriffsfläche (1a;4a) in Bewegungsrichtung (B) verläuft.

3. Piezoelektrischer Motor nach Anspruch 1, **dadurch gekennzeichnet, dass** dieser als Rotationsmotor ausgestaltet ist, mit einem kreisförmigen, als Rotor ausgestalteten Läufer (4), wobei die Hauptschwingungsrichtung (H) des Resonators (1,3;4,3) radial zum Drehzentrum des Läufer (4) ausgerichtet ist, und die Angriffsfläche (1a;4a) kreisförmig verläuft.

4. Piezoelektrischer Motor nach Anspruch 3, **dadurch gekennzeichnet, dass** der Stator (1) ringförmig ausgestaltet ist, der piezoelektrische Wandler (3) fest mit dem Stator (1) verbunden ist, und die Hauptschwingungsrichtung (H) radial zum Krümmungsmittelpunkt des Stators (1) verläuft.

5. Piezoelektrischer Motor nach einem der vorhergehenden Ansprüche, **dadurch gekennzeichnet, dass** das Vorschubelement (5) geradlinig verlaufend ausgestaltet ist.

6. Piezoelektrischer Motor nach einem der vorhergehenden Ansprüche, **dadurch gekennzeichnet, dass** das Vorschubelement (5) Teil des Stators (1) oder des Läufers (4) ist.

7. Piezoelektrischer Motor nach einem der vorhergehenden Ansprüche, **dadurch gekennzeichnet, dass** das Vorschubelement (5) bezüglich der Hauptschwingungsrichtung (H) einen Neigungswinkel (α) aufweist, welcher zwischen 45 Grad und mehr als 0 Grad beträgt.

8. Piezoelektrischer Motor nach einem der vorhergehenden Ansprüche, **dadurch gekennzeichnet, dass** am Stator (1) oder Läufer (4) eine Vielzahl von Vorschubelementen (5) nacheinander folgend angeordnet sind.

9. Piezoelektrischer Motor nach einem der vorhergehenden Ansprüche, **dadurch gekennzeichnet, dass** der erste Teilabschnitt (5c) und der zweite Teilabschnitt (5d) sich in einer Knickstelle treffen, und dass der erste Teilabschnitt (5c) im Winkel zur Hauptschwingungsrichtung (H) verläuft, und dass der zweite Teilabschnitt (5d) entgegengesetzt zum ersten Teilabschnitt (5c) im Winkel zur Hauptschwingungsrichtung (H) verläuft.

10. Piezoelektrischer Motor nach Anspruch 9, **dadurch gekennzeichnet, dass** der erste Teilabschnitt (5c) sowie der zweite Teilabschnitt (5d) derart ausgestaltet sind, dass sie eine unterschiedliche Resonanzfrequenz aufweisen.

11. Piezoelektrischer Motor nach einem der vorhergehenden Ansprüche, **dadurch gekennzeichnet, dass** der Resonator (1,3;4,3) derart ausgestaltet ist, dass in der Mitte der Stator (1) oder Läufer (4) und beidseitig desselben je ein piezoelektrischer Wandler (3) angeordnet ist.

12. Piezoelektrischer Motor nach einem der Ansprüche 1 bis 10, **dadurch gekennzeichnet, dass** der Resonator (1,3;4,3) derart ausgestaltet ist, dass der piezoelektrische Wandler (3) in der Mitte und beidseitig je ein Stator (1) oder ein Läufer (4) angeordnet ist.

13. Piezoelektrischer Motor nach einem der vorhergehenden Ansprüche, **dadurch gekennzeichnet, dass** der Läufer (4) als Aussenläufer ausgebildet ist.

14. Piezoelektrischer Motor nach einem der vorhergehenden Ansprüche, **dadurch gekennzeichnet, dass** der Läufer an einer Lagerstelle (9) gelagert ist.

15. Piezoelektrischer Motor nach Anspruch 2, **dadurch gekennzeichnet, dass** der Stator (1) linear verlaufend ausgebildet ist, dass der Resonator (1,3;4,3) plattenförmig ausgebildet ist, und dass der Resonator (1,3;4,3) bezüglich dem Stator (1) linear beweglich gelagert ist.

16. Piezoelektrischer Motor nach Anspruch 2, **dadurch gekennzeichnet, dass** der piezoelektrische Wandler (3) mit dem Stator (1) den Resonator (1,3) bildet.

17. Piezoelektrischer Motor nach Anspruch 16, **dadurch gekennzeichnet, dass** der Läufer (4) bezüglich des Stators (1) linear beweglich gelagert ist und mindestens ein Vorschubelement (5) aufweist.

18. Piezoelektrischer Motor nach Anspruch 16 oder 17, **dadurch gekennzeichnet, dass** der Stator (1) einen H-förmigen Querschnitt aufweist, der zwei Kanäle bildet, wobei der Läufer (4) in einem ersten Kanal linear beweglich gelagert ist und ein oder mehrere piezoelektrische Wandler (3) in einem zweiten Kanal angeordnet sind.

19. Piezoelektrischer Motor nach Anspruch 16 oder 17, **dadurch gekennzeichnet, dass** der Stator (1) einen U-förmigen Querschnitt aufweist, der einen Kanal bildet, wobei der Läufer (4) in diesem Kanal linear beweglich gelagert ist und ein oder mehrere piezoelektrische Wandler (3) an einem Bodenteil (14) des U-Profils angebracht sind.

20. Verfahren zum Antrieb eines piezoelektrischen Motors (6) umfassend einen Stator (1) sowie einen Läufer (4), wobei der Stator (1) oder der Läufer (4) piezoelektrisch zu einer Schwingung mit Hauptschwingungsrichtung (H) angeregt wird, **dadurch gekennzeichnet, dass** der Stator (1) eine dem Läufer (4) zugewandte oder der Läufer (4) eine dem Stator (1) zugewandte Angriffsfläche (1a; 4a) aufweist, dass der Stator (1) oder der Läufer (4) ein zur Angriffsfläche (1a;4a) hin ausgerichtetes Vorschubelement (5) umfasst, dass das Vorschubelement (5) einen ersten Teilabschnitt (5c) sowie einen zweiten Teilabschnitt (5d) aufweist, wobei der erste Teilabschnitt (5c) mit dem Stator (1) respektive dem Läufer (4) verbunden ist, dass der erste Teilabschnitt (5c) im Winkel zur Hauptschwingungsrichtung (H) verläuft, dass der zweite Teilabschnitt (5d) im Winkel zur Hauptschwingungsrichtung (H) und entgegengesetzt zum ersten Teilabschnitt (5c) verläuft, dass der erste und zweite Teilabschnitt (5c,5d) eine unterschiedliche Resonanzfrequenz aufweisen, dass das Vorschubelement (5) auf Grund der Schwingung derart in Wirkverbindung mit der Angriffsfläche (1a;4a) gebracht wird, dass der Läufer (4) bezüglich dem Stator (1) bewegt wird, und dass in Abhängigkeit der Frequenz der angreifenden Schwingung der Läufer (4) bezüglich dem Stator (1) in die eine Richtung oder in die dazu entgegen gesetzte Richtung bewegt wird.

21. Verwendung eines piezoelektrischen Motors nach einem der Ansprüche 1 bis 19 für zeitmesstechnische Vorrichtungen, fotografische Apparate, Messinstrumente oder Tachometer.

## Claims

1. Piezoelectric motor (6) comprising a stator (1) and a runner (4) which form a gap (7), as well as comprising a piezoelectric transducer (3) which is connected to the stator (1) or the runner (4) and which with the stator (1) or the runner (4) forms a resonator (1,3; 4,3), wherein the resonator (1,3; 4,3) may be excited in a main oscillation direction (H), **characterised in that** the stator (1) comprises an engagement surface (1a) facing the runner (4), or the runner (4) an engagement surface (4a) which faces the stator (1), and that the stator (1) or the runner (4) comprises an elastic advance element (5) which bridges the gap (7) between the stator (1) and the runner (4) in a manner such that the advance element (5) at least temporarily lies on the engagement surface (1a; 4a) and said advance element (5) comprises a first part-section (5c) as well as a second part-section (5d), wherein the first part-section (5c) is connected to the stator (1) or the runner (4) respectively and wherein the part-sections (5c, 5d) have a different resonant frequency.

2. Piezoelectric motor according to claim 1, **characterised in that** this is designed as a linear motor, that the resonator (1,3; 4,3) has a movement direction (B) which runs perpendicularly to the main oscillation direction (H), and that the engagement surface (1a; 4a) runs in the movement direction (B).

3. Piezoelectric motor according to claim 1, **characterised in that** this is designed as a rotation motor, with a circular runner (4) formed as a rotor, wherein the main oscillation direction (H) of the resonator (1,3; 4,3) is directed radially to the rotation centre of the runner (4), and the engagement surface (1a; 4a) runs in a circular manner.

4. Piezoelectric motor according to claim 3, **characterised in that** the stator (1) is designed in an annular manner, the piezoelectric transducer (3) is rigidly connected to the stator (1), and the main oscillation direction (H) runs radially to the centre of curvature of the stator (1).

5. Piezoelectric motor according to one of the preceding claims, **characterised in that** the advance element (5) is designed running in a straight line.

6. Piezoelectric motor according to one of the preceding claims, **characterised in that** the advance element (5) is part of the stator (1) or of the runner (4).

7. Piezoelectric motor according to one of the preceding claims, **characterised in that** the advance element (5) comprises an inclination angle (α) with respect to the main oscillation direction (H), which is between 45 degrees and more than 0 degrees.

8. Piezoelectric motor according to one of the preceding claims, **characterised in that** a multitude of advance elements (5) are arranged successively one after another on the stator (1) or runner (4).

9. Piezoelectric motor according to one of the preceding claims, **characterised in that** the first part-section (5c) and the second part-section (5d) meet at a sharp-bend location, and that the first part-section (5c) runs at an angle to the main oscillation direction (H) and that the second part-section (5d) runs opposite to the first part-section (5c) at an angle to the main oscillation direction (H).

10. Piezoelectric motor according to claim 9, **characterised in that** the first part-section (5c) as well as the second part-section (5d) are designed in a manner such that they have a different resonant frequency.

11. Piezoelectric motor according to of the preceding claims, **characterised in that** the resonator (1,3; 4,3) is designed in a manner such that the stator (1) or runner (4) is arranged in the middle and on each side of the same one piezoelectric transducer (3) each is arranged.

12. Piezoelectric motor according to one of claims 1 to 10, **characterised in that** the resonator (1,3; 4,3) is designed in a manner such that the piezoelectric transducer (3) is arranged in the middle and on both sides in each case a stator (1) or a runner (4) is arranged.

13. Piezoelectric motor according to one of preceding claims, **characterised in that** the runner (4) is designed as an outer runner.

14. Piezoelectric motor according to one of the preceding claims, **characterised in that** the runner is mounted at a bearing location (9).

15. Piezoelectric motor according to claim 2, **characterised in that** the stator (2) is designed running in a linear manner, that the resonator (1,3;4,3) is formed plate-like, and that the resonator (1,3;4,3) is mounted in a linearly movable manner with respect to the stator (1).

16. Piezoelectric motor according to claim 2, **characterised in that** the piezoelectric transducer (3) with the stator (1) forms the resonator (1,3).

17. Piezoelectric motor according to claim 16, **characterised in that** the runner (4) is mounted in a linearly movable manner with respect to the stator (1) and comprises at least one advance element (5).

18. Piezoelectric motor according to claim 16 or 17, **characterised in that** the stator (1) has an H-shaped cross section which forms two channels, wherein the runner (4) is mounted in a linearly movable manner in a first channel, and one or more piezoelectric transducers (3) are arranged in a second channel.

19. Piezoelectric motor according to claim 16 or 17, **characterised in that** the stator (1) has a U-shaped cross section which forms a channel, wherein the runner (4) is mounted in this channel in a linearly movable manner, and one or more piezoelectric transducers (3) are attached on a base part (14) of the U-profile.

20. Method for driving a piezoelectric motor (6) comprising a stator (1) as well as a runner (4), wherein the stator (1) or the runner (4) is excited piezoelectrically into an oscillation with a main oscillation direction (H), **characterised in that** the stator (1) comprises an engagement surface (1a) which faces the runner (4), or the runner (4) an engagement surface which faces the stator (1), that the stator (1) or the runner (4) comprises an advance element (5) directed towards the engagement surface (1a), that the advance element (5) comprises a first part-section (5c) as well as a second part-section (5d), that the first part-section (5c) runs at an angle to the main oscillation direction (H), that the second part-section (5d) runs at an angle to the main oscillation direction (H) and opposite to the first part-section (5c), that the first and the second part-section (5c, 5d) have a different resonant frequency, that the advance element (5) on account of the oscillation is brought into active connection with the engagement surface (1a) in a manner such that the runner (4) is moved with respect to the stator (1), and that the runner (4) with respect to the stator (1) is moved in the one direction or in the opposite direction, depending on the frequency of the engaging oscillation.

21. The use of a piezoelectric motor according to one of the claims 1 to 19 for time-measurement-technology devices, photographic apparatus, measurement instruments or tachometers.

## Revendications

1. Moteur piézoélectrique (6) comportant un stator (1) et un induit (4), lesquels forment un entrefer (7), ainsi qu'un convertisseur piézoélectrique (3) relié au stator (1) ou à l'induit (4), lequel forme un résonateur (1, 3 ; 4, 3) avec le stator (1) ou l'induit (4), le résonateur (1, 3 ; 4, 3) pouvant être excité dans une direction principale de vibration (H), **caractérisé en ce que** le stator (1) présente une surface d'attaque (la ; 4a) tournée vers l'induit (4) ou l'induit (4) présente une surface d'attaque (1a ; 4a) tournée vers le stator (1), et **en ce que** le stator (1) ou l'induit (4) comporte un élément d'avance élastique (5) qui ponte l'entrefer (7) entre le stator (1) et l'induit (4) de sorte que l'élément d'avance (5) vient s'appliquer au moins temporairement sur la surface d'attaque (1a; 4a) et présente un premier tronçon partiel (5c) ainsi qu'un second tronçon partiel (5d), le premier tronçon partiel (5c) étant relié au stator (1) ou à l'induit (4) et les tronçons partiels (5c, 5d) présentant une fréquence de résonance différente.

2. Moteur piézoélectrique selon la revendication 1, **caractérisé en ce que** :
- celui-ci est réalisé comme moteur linéaire ;
- le résonateur (1, 3 ; 4, 3) présente une direction de déplacement (B) qui s'étend perpendiculairement à la direction principale de vibration (H) ; et
- la surface d'attaque (1a ; 4a) s'étend dans la direction de déplacement (B).

3. Moteur piézoélectrique selon la revendication 1, **caractérisé en ce que** celui-ci est réalisé comme moteur à cylindres rotatifs, comprenant un induit (4) circulaire réalisé comme rotor, la direction principale de vibration (H) du résonateur (1, 3 ; 4, 3) étant orientée radialement par rapport au centre de rotation de l'induit (4) et **en ce que** la surface d'attaque (la ; 4a) s'étend en forme de cercle.

4. Moteur piézoélectrique selon la revendication 3, **caractérisé en ce que** :
- le stator (1) est réalisé avec une forme annulaire ;
- **en ce que** le convertisseur piézoélectrique (3) est relié fermement au stator (1) ; et
- **en ce que** la direction principale de vibration (H) s'étend radialement par rapport au centre de courbure du stator (1).

5. Moteur piézoélectrique selon l'une des revendications précédentes, **caractérisé en ce que** l'élément d'avance (5) est réalisé en s'étendant en ligne droite.

6. Moteur piézoélectrique selon l'une des revendications précédentes, **caractérisé en ce que** l'élément d'avance (5) fait partie du stator (1) ou de l'induit (4).

7. Moteur piézoélectrique selon l'une des revendications précédentes, **caractérisé en ce que** l'élément d'avance (5) présente un angle d'inclinaison (α) par rapport à la direction principale de vibration (H), lequel est compris entre 45 degrés et plus de 0 degré.

8. Moteur piézoélectrique selon l'une des revendications précédentes, **caractérisé en ce qu'**une pluralité d'éléments d'avance (5) sont agencés consécutivement l'un derrière l'autre sur le stator (1) ou sur l'induit (4).

9. Moteur piézoélectrique selon l'une des revendications précédentes, **caractérisé en ce que** :
- le premier tronçon partiel (5c) et le second tronçon partiel (5d) se rencontrent dans un point de pliure ;
- le premier tronçon partiel (5c) s'étend en angle par rapport à la direction principale de vibration (H) ; et
- le second tronçon partiel (5d) s'étend en angle par rapport à la direction principale de vibration (H), à l'opposé du premier tronçon partiel (5c).

10. Moteur piézoélectrique selon la revendication 9, **caractérisé en ce que** le premier tronçon partiel (5c) ainsi que le second tronçon partiel (5d) sont réalisés de manière à présenter une fréquence de résonance différente.

11. Moteur piézoélectrique selon l'une des revendications précédentes, **caractérisé en ce que** le résonateur (1, 3 ; 4, 3) est réalisé de sorte que le stator (1) ou l'induit (4) est agencé au milieu et qu'un convertisseur piézoélectrique (3) est agencé sur chacun des deux côtés dudit stator ou dudit induit.

12. Moteur piézoélectrique selon l'une des revendications 1 à 10, **caractérisé en ce que** le résonateur (1, 3 ; 4, 3) est réalisé de sorte que le convertisseur piézoélectrique (3) est agencé au milieu et qu'un stator (1) ou un induit (4) est agencé sur chacun des deux côtés.

13. Moteur piézoélectrique selon l'une des revendications précédentes, **caractérisé en ce que** l'induit (4) est réalisé comme induit extérieur.

14. Moteur piézoélectrique selon l'une des revendications précédentes, **caractérisé en ce que** l'induit est monté sur un point d'appui (9).

15. Moteur piézoélectrique selon la revendication 2, **caractérisé en ce que** :
- le stator (1) est réalisé en s'étendant linéairement ;
- le résonateur (1, 3 ; 4, 3) est réalisé en forme de plaque ; et
- le résonateur (1, 3 ; 4, 3) est monté avec mobilité linéaire par rapport au stator (1).

16. Moteur piézoélectrique selon la revendication 2, **caractérisé en ce que** le convertisseur piézoélectrique (3) forme le résonateur (1, 3) conjointement avec le stator (1).

17. Moteur piézoélectrique selon la revendication 16, **caractérisé en ce que** l'induit (4) est monté avec mobilité linéaire par rapport au stator (1) et présente au moins un élément d'avance (5).

18. Moteur piézoélectrique selon l'une ou l'autre des revendications 16 et 17, **caractérisé en ce que** le stator (1) présente une section transversale en forme de H qui forme deux canaux, l'induit (4) étant monté avec mobilité linéaire dans un premier canal et un ou plusieurs convertisseurs piézoélectriques (3) étant agencés dans un second canal.

19. Moteur piézoélectrique selon l'une ou l'autre des revendications 16 et 17, **caractérisé en ce que** le stator (1) présente une section transversale en forme de U qui forme un canal, l'induit (4) étant monté avec mobilité linéaire dans ce canal et un ou plusieurs convertisseurs piézoélectriques (3) étant installés sur une partie de fond (14) du profilé en U.

20. Procédé pour entraîner un moteur piézoélectrique (6) comportant un stator (1) ainsi qu'un induit (4), dans lequel le stator (1) ou l'induit (4) est excité par action piézoélectrique pour former une vibration présentant une direction principale de vibration (H), **caractérisé en ce que** :
- le stator (1) présente une surface d'attaque (la ; 4a) tournée vers l'induit (4) ou l'induit (4) présente une surface d'attaque (la ; 4a) tournée vers le stator (1) ;
- le stator (1) ou l'induit (4) comporte un élément d'avance élastique (5) orienté vers la surface d'attaque (1a ; 4a) ;
- l'élément d'avance (5) présente un premier tronçon partiel (5c) ainsi qu'un second tronçon partiel (5d), le premier tronçon partiel (5c) étant relié au stator (1) ou à l'induit (4) ;
- le premier tronçon partiel (5c) s'étend en angle par rapport à la direction principale de vibration (H) ;
- le second tronçon partiel (5d) s'étend en angle par rapport à la direction principale de vibration (H) et à l'opposé du premier tronçon partiel (5c) ;
- le premier et le second tronçon partiel (5c, 5d) présentent une fréquence de résonance différente ;
- en raison de la vibration, l'élément d'avance (5) est amené en liaison efficace avec la surface d'attaque (1a ; 4a) de sorte que l'induit (4) est déplacé par rapport au stator (1);et
- en dépendance de la fréquence de la vibration d'attaque, l'induit (4) est déplacé par rapport au stator (1) dans une direction ou dans une direction opposée à celle-ci.

21. Utilisation d'un moteur piézoélectrique selon l'une des revendications 1 à 19 pour des dispositifs dans la technique de mesure temporelle, des appareils photographiques, des instruments de mesure ou des tachymètres.
